# EUROPÄISCHE PATENTANMELDUNG

(11) **EP 0 524 403 A1**
(43) Veröffentlichungstag der Anmeldung: **27.01.1993**
(21) Anmeldenummer: 92109084.1
(22) Anmeldetag: 29.05.1992
(51) Int. Cl.: B32B 7/10, B32B 21/14, E06B 5/16, B27N 9/00, B27N 1/02

(54) **Mehrschichtmaterialstruktur**

(30) Priorität: 24.06.1991 DE 4120759
(71) Anmelder: FLAM-X Gesellschaft für Brandschutz Technologie mbH & Co. KG, D-82205 Gilching (DE)
(72) Erfinder: Mader, Heinz, B., W-8031 Gilching (DE); Halder, Albert Heinz, W-8850 Donautwörth (DE)
(74) Vertreter: Fricke, Joachim, Dr.

(57) **Zusammenfassung**

Es ist eine Mehrschichtmaterialstruktur (10,20,30,40) in Plattenform für die Herstellung von Türen oder dgl. vorgesehen, bei der in der bevorzugten Ausführungsform zwei Holzfurnierblätter (11) mittels einer Zwischenschicht (12) heiß verpreßt sind, bei der die Zwischenschicht ein Mineralfasergewebe (13) aufweist, das mit einer Masse getränkt oder beschichtet ist, welche oberhalb einer vorbestimmten Temperatur zu einer im wesentlichen für Luft undurchlässigen Schicht zusammensintert, im frisch zubereiteten Zustand jedoch eine hohe Klebkraft entwickelt. Die Mehrschichtmaterialstruktur kann durch Verdoppelung oder Vervielfachung der Schichtfolge (11,12,11) variiert werden.

## Beschreibung

Die Erfindung betrifft eine Mehrschichtmaterialstruktur in Plattenform für die Herstellung von Türen, Klappen, Deckel, Behälter oder dgl., sowie ein Verfahren zu dessen Herstellung.

Es ist bekannt, Platten oder andere Formteile aus Massen herzustellen, welche aus Stoffen gemischt sind, die der Platte oder dem Formteil brandhemmende oder unbrennbare Eigenschaft verleiht. So ist es aus der DE-OS 32 33 354 bekannt, eine Spanplatte dadurch herzustellen, daß man die Holzspäne vor ihrem Beleimen mit Ammoniumsulfat imprägniert und die Späne nach ihrem Beleimen mit unbeleimtem Vermiculitpulver vermischt, wonach die Mischung zu der Platte verpreßt wird. Es ist auch bekannt, feuerbeständige Pappe oder Platten durch Erhitzen von Vermiculit bis zum thermischen Expandieren und durch Mischen des expandierten Vermiculits mit einer pappenbildenden Schlämme herzustellen (vgl. DE-OS 26 32 885). Man hat auch schon plattenförmige Bauelemente in Sandwich-Bauweise zur Verwendung in Luftfahrzeugen dadurch hergestellt, daß man in eine tragende Schicht des Elementes wasserglasgebundenes Vermiculitpulver oder Perlitpulver integriert. Auch in diesem Falle wird das Vermiculitpulver oder Perlitpulver mit Wasserglas zu einer verpreßbaren Masse vermischt, aus der dann die Platte oder der Formkörper gepreßt wird (vgl.DE-OS 33 03 204). Man hat aber auch Wasserglas in Verbindung mit einem mineralischen Füllstoff, z.B. Kaolinmehl oder Quarzmehl dazu verwendet, um durch Aufsprühen oder Aufstreichen oder Aufspachteln oder durch Tränken von Pappe, Papier oder Glasfaservlies einem solchen Material eine bessere Festigkeit oder Biegefähigkeit oder auch einen besseren Flammwiderstand zu verleihen (vgl. DE-OS 36 23 858). Nach der Tränkung oder Beschichtung wird das Vlies dann in einem Trockenkanal einem Trocknungsvorgang ausgesetzt. Ein solches Vlies wird dann auf Vorratsrollen ausgerollt und bei Bedarf zu verschiedenen Zwecken verwendet. Man kann auch mehrere solche Vliesteile unter Verwendung von Wasserglas als Kleber miteinander verbinden, um einen mehrschichtigen Werkstoff zu erhalten.

Der Erfindung liegt die Aufgabe zugrunde, eine Mehrschichtmaterialstruktur zu schaffen, die vielseitig, insb. in feuergefährdeten Bereichen als sogenannter Baustein eingesetzt und durch einfache Variation leicht an unterschiedliche Anforderungen und Einsatzzwecke angepaßt werden kann. Diese Aufgabe wird gemäß der Lehre des Anspruchs 1 gelöst.

Dabei besteht der Baustein in seiner einfachsten Ausführung aus drei Schichten, von denen wenigstens eine Schicht ein einfaches Holzfurnier ist, während die Zwischenschicht aus einem Mineralfasergewebe besteht, das mit einer klebfähigen Masse getränkt oder beidseitig beschichtet ist und das Holzfurnier mit der dritten Schicht fest verbindet. Die Zwischenschicht hat neben dieser Aufgabe, die beiden Außenschichten fest miteinander zu verbinden zugleich die Aufgabe dem Baustein einen vorbestimmten feuerhemmenden Widerstand zu verleihen. Die drei Schichten oder Lagen werden durch Heißpressen fest miteinander verbunden.

Dieser Grundbaustein kann z.B. zum Herstellen von feuerhemmenden Holztüren oder Klappen oder auch Deckeln verwendet werden. Es ist aber auch möglich aus diesen Bausteinplatten Behälter herzustellen.

Der besondere Vorteil dieser Mehrschichtmaterialstruktur liegt in seiner einfachen Verarbeitbarkeit, da das außenliegende Holzfurnier mit Hilfe eines üblichen Kaltleimes mit jeder weiteren Holzmaterialschicht und auch einigen Kunststoffmaterialschichten kalt verpreßt werden kann. Auch läßt sich auf die Holzfurnierschicht jedes gewünschte Dekorationsmaterial oder jeder Farbanstrich oder dgl. aufbringen.

Je nach den Anforderungen kann die dritte Schicht dieses Grundbausteines eine übliche Hartfaserplatte oder eine Sperrholzplatte, insb. eine dreifach versperrte Pappelsperrholzplatte sein. Es kann als dritte Lage aber auch eine Preßplatte vorgesehen sein, die aus wasserglasgebundenem Vermiculit und/oder Kaolin besteht, wobei der Kaolinanteil 20 bis 50 Vol.-%, vorzugsweise etwa 30 Vol.-% ausmacht. Vermiculit ist in Granulatform erhältlich. Kaolin wird in Pulverform eingesetzt.

Mit einem solchen Grundbaustein kann beispielsweise eine feuerhemmende Holztür der Feuerwiderstandsklasse T-30 ausgerüstet werden, indem die Platte auf kaltem Wege von außen mit einem üblichen Rahmen, z.B. einem Hartholzrahmen, beidseitig verleimt wird. Die Mittellage der Tür kann aus Vollspan oder aus anderen geeigneten Materialien bestehen.

Ein besonderer Vorteil des Bausteines besteht in seiner Variationsmöglichkeit, insb. in der Form, daß jeweils zwei einfache Furnierlagen mit Hilfe der Zwischenschicht heiß verpreßt sind. Dabei kann die Folge von Furnierblatt und Zwischenschicht beliebig vervielfacht werden, wobei alle Furnierschichten mit den jeweils zwischen zwei Furnierschichten liegenden Zwischenschichten zunächst zusammengelegt und dann gemeinsam heiß verpreßt werden, so daß sie eine Baueinheit bilden. Je nach Anzahl der beschriebenen Materialfolgen erhöht sich der Flammwiderstand der Mehrschichtmaterialstruktur. Bereits mit einer Hartfaserplatte oder verperrtem Pappelsperrholz und je einer außenliegenden, jeweils über eine Zwischenschicht damit durch Heißpressen vereinigten Furnierschicht kann ein Mehrschichtmaterialstrukturelement erhalten werden, welche in Verbindung mit den für feuerhemmende Türen üblichen Materialien den Anforderungen der Feuerwiderstandsklasse T-60 genügt.

Durch Variation dieser Mehrschichtmaterialstrukturen in der beschriebenen Weise kann man plattenförmige Bauelemente erhalten, die selbst den Anforderungen der Feuerwiderstandsklasse bis T-120 genügen.

Bei den Feuerwiderstandsklassen T-90 bis T-120 sollte der üblicherweise aus Hartholz bestehende Türrahmen durch eine Mehrschichtmaterialstruktur, die durch Kaltleimen mehrerer Schichten von Grundbausteinen gebildet ist, ersetzt werden.

Weiterhin kann die Mehrschichtmaterialstruktur durch Kaltleimen mit einer Mittellage verbunden werden, die in Form einer eine Vielzahl von parallelen und an den Enden offenen Kanälen aufweisenden Platte ausgebildet ist, die aus Vermiculit und Wasserglas gepreßt ist. Bevorzugt wird dabei Kaliwasserglas. Ein Zusatz von Wasser stellt die Masse für den Preßvorgang ein. Statt Vermiculit kann auch Kaolinpulver verwendet werden. Der Feststoffanteil beträgt vorteilhafterweise 20 bis 40 Vol.-% und liegt bevorzugt bei etwa 30 Vol.-%.

Bei der Vorbereitung der Zwischenschicht wird die dafür benötigte Masse vorzugsweise aus zwei Teilen Kaolin und drei bis fünf Teilen Wasserglas gemischt, wobei bevorzugt die Mischung bei einem Teil Kaolin und zwei Teilen Wasserglas liegt. Durch Zugabe von Wasser wird die Masse spritz- oder streichfähig eingestellt, so daß das Glasfasergewebe damit getränkt oder so beschichtet werden kann, daß die Masse auf beiden Seiten des Glasfasergewebes ihre Wirkung entfalten kann.

Die Erfindung wird nachfolgend anhand schematischer Zeichnungen an mehreren Ausführungsbeispielen näher erläutert.

Es zeigen:
- Figur 1: im Ausschnitt und im Querschnitt eine Mehrschichtmaterialstruktur in Form des Grundbausteines gemäß der Erfindung;
- Figur 2: in ähnlicher Darstellung wie Figur 1 zwei weitere Ausführungsvarianten,
- Figur 3: in gleicher Darstellung wie Figur 1 eine weitere Variation der Mehrschichtmaterialstruktur,
- Figur 4: in gleicher Darstellung wie Figur 1 eine Mehrschichtmaterialstruktur gemäß der Erfindung in einer Form, die höchsten Anforderungen genügt und
Figur 5 feuerhemmende Leichtbautüre mit der Mehrschichtmaterialstruktur.

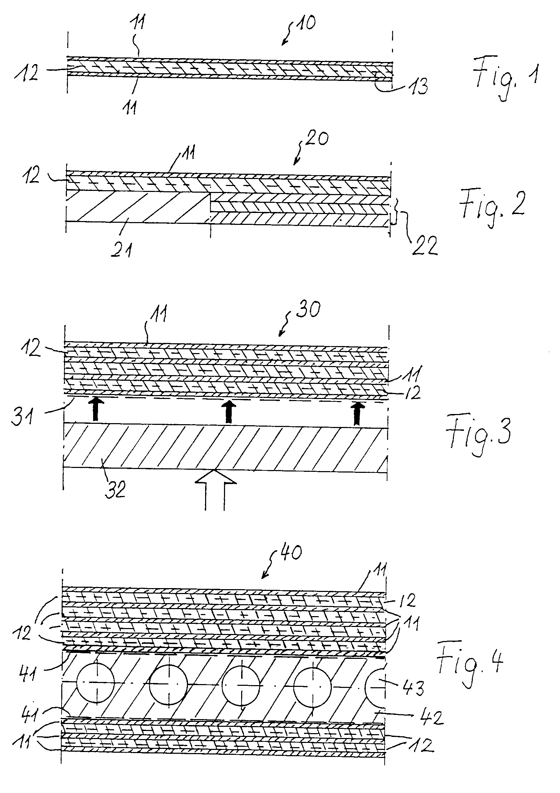

Der Grundbaustein der Mehrschichtmaterialstruktur ist in Figur 1 bei 10 gezeigt und besteht aus zwei Holzfurnieren 11, die mit Hilfe einer Zwischenschicht 12 heiß verpreßt sind. Die Zwischenschicht 12 umfaßt ein Glasfasergewebe 13, welches mit einer Masse getränkt ist, die aus Wasserglas, Kaolin und Wasser besteht. Die frisch zubereitete Zwischenschicht weist hohe Klebkraft auf, so daß die drei Schichten der Mehrschichtmaterialstruktur nach dem Zusammenlegen mit hohem Druck und bei erhöhter Temperatur heiß verpreßt werden können. Bei dem Heißpressen verdampft ein Teil der Feuchtigkeit, so daß nach dem Pressen ein lagerfähiges plattenförmiges Mehrschichtmaterialstrukturelement als Grundbaustein erhalten wird. Dieser kann vielseitig, insb. auch in der oben schon beschriebenen Weise direkt verwendet werden.

Wenn der Grundbaustein direkt und als solcher eingesetzt werden soll, kann er nach Figur 2 abgewandelt werden. Bei der in der linken Hälfte der Mehrschichtmaterialstruktur 20 gezeigten Ausführung ist ein einfaches Holzfurnier 11 über die Zwischenschicht 12 mit einer üblichen Hartfaserplatte 21 heiß verpreßt. Eine solche Grundbausteinplatte 21 weist in einer gängigen Form eine Dicke von ca. 5 mm auf und besitzt ein Gewicht von etwa 4,7 kg pro m². In der rechten Hälfte der Figur 2 ist das Furnierblatt 11 über die Zwischenschicht 12 mit einem dreifach versperrten Pappelsperrholz üblicher Ausführung heiß verpreßt, welches mit 22 bezeichnet ist. Dabei entsteht eine Grundbausteinplatte mit einer Dicke von etwa 4,5 mm und einem wesentlich geringerem Gewicht von etwa 2,13 kg pro m². Das Pappel holz hat den besonderen Vorteil, daß es nur einen geringen Harzanteil aber viele feine Hohlräume aufweist und leichter als eine Hartfaserplatte ist.

In jeder dieser beschriebenen Formen läßt sich die Mehrschichtmaterialstruktur leicht mit üblichen Maschinen bearbeiten und unter Verwendung üblicher Kaltleime mit anderen Bauelementen beliebiger Art vereinigen.

In einer besonderen Variation kann die dritte Schicht auch, wie weiter oben schon beschrieben, aus einer Preßplatte bestehen, die aus durch Kaliwasserglas und Wasser gebundenem Vermiculitpulver und/oder Kaolinpulver besteht.

Für die Verwendung als Grundbausteinplatte wird eine Ausführung nach Figur 2 (linke Hälfte oder rechte Hälfte) bevorzugt.

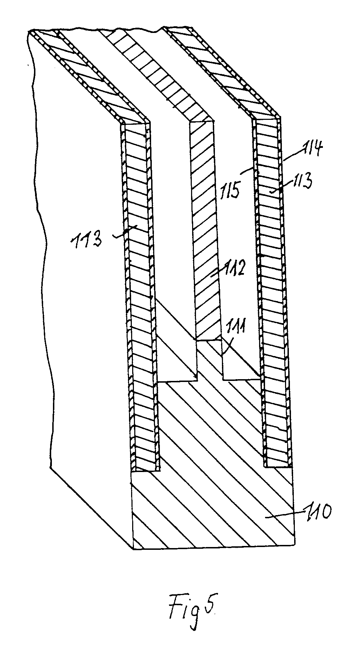

Die Mehrschichtmaterialstruktur in ihrer Grundform bietet weitere wesentliche Variationsmöglichkeit, und zwar durch Vervielfachung des Grundbausteins nach Figur 1 in der Weise, wie dies in den Figuren 3 und 4 gezeigt ist.

Bei der Mehrschichtmaterialstruktur 30 nach Figur 3 sind z.B. vier einfache Holzfurniere 11 jeweils unter Zwischenschaltung einer Zwischenschicht 12 durch gemeinsames heißes Verpressen zu einer Platte vereinigt. Auf die außenliegende Holzfurnierschicht 11 kann ein Kaltleim 31 aufgetragen werden, um eine weitere Lage 32, z.B. eine Hartfaserplatte oder dgl. aufzuleimen. Der Preßvorgang ist in Figur 3 durch die Pfeile (Kraftrichtung) schematisch dargestellt. So wird die gezeigte Platte hergestellt. Die Materiallage 32 kann als Hartfaserplatte oder als Spanplatte ausgestaltet werden. Auch vergleichbare Baustoffe sind heranziehbar. Die Materiallage kann auch aus einer Röhrenstruktur bestehen.

Bei der Mehrschichtmaterialstruktur 40 nach Figur 4 ist eine innere Lage 42 vorgesehen, welche aus einer Platte besteht, die aus Vermiculitpulver, Kaliwasserglas und Wasser formgepreßt ist, wobei eine Vielzahl von zueinander und zur Oberfläche der Platte parallele Kanäle 43 eingeformt sind. Diese Kanäle sind an den Stirnflächen der Platte offen. Diese Platte ist beidseitig unter Verwendung von Kaltleim 41 mit einer Mehrschichtmaterialstruktur, z.B. nach Art der Figur 3, verpreßt. Die Anordnung muß nicht symmetrisch sein, wie dies Figur 4 veranschaulicht. Die Röhrenplatte 42 braucht in der Gesamtplatte nicht mittig angeordnet zu sein. Im dargestellten Beispiel ist auf der einen Seite der Röhrenplatte eine Mehrschichtmaterialstruktur mit fünf Furnierblättern und entsprechenden Zwischenschichten und auf der anderen Seite eine solche Struktur mit drei Furnieren und entsprechenden Zwischenschichten angeordnet.

Bei Verdoppelung oder Vervielfachung der Grundstruktur wird nur jeweils einfaches Holzfurnier, also keine Hartfaserplatte oder auch kein Sperrholz verwendet. Die Dicke der auf der Oberseite der Röhrenplatte angeordneten Mehrschichtmaterialstruktur mit fünf Furnieren beträgt nur etwa 4,5 mm, wobei die Materialstruktur nur ein Gewicht von etwa 5,5 kg pro m² aufweist.

Bei Verwendung einer Röhrenplatte 42 kann sichergestellt werden, daß in dem aus der Mehrschichtmaterialstruktur hergestellten Bauelement Wärme aus dem Inneren durch Kanalwirkung (Kaminwirkung) zuverlässig nach einer oder beiden Stirnseiten abgeführt werden kann.

Wird eine Tür in der Art nach Figur 4 für höchste Anforderungen bezüglich Feuerwiderstand hergestellt, so wird vorgeschlagen, statt des üblichen Türrahmens einen solchen aus Mehrschichtmaterialstruktur zu verwenden, die aus einer entsprechenden Anzahl von Folgen von Furnierplatten und Zwischenschichten besteht und die Röhrenplatte 42 rahmenförmig umgibt.

Figur 5 zeigt eine feuerhemmende Leichtbautüre mit einem Rahmen 110, 111 aus Hartholz und einer Innenstruktur 112 die als Steg ausgebildet ist. Außen sind Deckplatten 113 vorgesehen. Jede Deckplatte ist mehrschichtig. Sie besteht aus einer tragenden plattenförmigen Schicht 113 mit einer Dicke von beispielsweise etwa 4 bis 7 mm. Diese tragende Schicht 113 besteht bei der gezeigten Ausführung aus einer Preßmasse, die in ausreichenden Mengen pulverförmiges Vermiculit und/oder Kaolin gebunden in Wassergals enthält. Auf der Außenseite ist eine Schicht 114, auf ihr fest aufgebracht, die aus einem Faservlies oder Fasergewebe, insb. Glasfasergewebe besteht. Die Schicht 114 ist mit einer Masse beschichtet oder getränkt.

Die Masse kann aus mit Wasserglas angemachtem Kaolin bestehen, das mit Wasser, z.B. bis zu einer spritzfähigen Konsistenz, verdünnt ist. Mit dieser Masse kann die Faserschicht mit Hilfe z.B. einer Spritzpistole bis zur Sättigung getränkt werden. Nach dem Trocknen bildet die Masse eine feste, aber in gewissen Grenzen hygroskopische Schicht. Man kann die trockene Schicht auch nachträglich gegenüber Feuchtigkeitseinwirkung der Atmosphäre durch Aufbringen einer luftundurchlässigen Schicht schützen.

Auf diese Außenschicht 114 kann ein Holzfurnier und darauf eine Dekorschicht beliebiger Art, z.B. ein Farbauftrag, eine Folie oder dgl. aufgebracht werden.

## Patentansprüche

1. Mehrschichtmaterialstruktur in Plattenform für die Herstellung von Türen, Klappen, Deckel, Behälter oder dgl., bei der zwei Holzfurniere oder ein Holzfurnier (11) und eine Hartfaser- oder Sperrholzplatte (21, 22) über eine ein Mineralfasergewebe (13) enthaltende Zwischenschicht (12) durch Heißpressen verbunden sind, wobei das Mineralfasergewebe (13) mit einer die erforderliche Klebkraft aufweisenden Masse getränkt oder beidseitig beschichtet ist, welche oberhalb einer vorbestimmten Temperatur zu einer im wesentlichen luftundurchlässigen Schicht zusammenensintert.

2. Mehrschichtmaterialstruktur nach Anspruch 1, **dadurch gekennzeichnet**, daß die auf ein Mineralfasergewebe (13) aufgebrachte Masse aus Wasserglas, Kaolin und Wasser besteht.

3. Mehrschichtmaterialstruktur nach Anspruch 1 oder 2, **dadurch gekennzeichnet**, daß drei oder mehr als drei Holzfurniere (11) jeweils über eine Zwischenschicht (12) aus einem beschichteten oder getränkten Mineralfasergewebe (13) durch Heißpressen miteinander vereinigt sind.

4. Mehrschichtmaterialstruktur nach Anspruch 1 oder 2, **dadurch gekennzeichnet**, daß eine Hartfaser- oder Sperrholzplatte (21,22) beidseitig mit einem Holzfurnier (11) jeweils über eine Zwischenschicht (12) aus einem beschichteten oder getränkten Mineralfasergewebe (13) durch Heißpressen vereinigt ist.

5. Mehrschichtmaterialstruktur nach Anspruch 4, **dadurch gekennzeichnet**, daß die Sperrholzplatte (22) aus mehrfach versperrtem Pappelholz besteht.

6. Mehrschichtmaterialstruktur nach einem der Ansprüche 1 bis 5, **dadurch gekennzeichnet**, daß diese (30, 40) über das außenliegende Holzfurnier (11) unter Verwendung eines Kaltleimes (31) mit einer weiteren Materiallage (42,43,32), insb. einer Hartfaser- oder Spanplatte (32) verpreßt wird.

7. Mehrschichtmaterialstruktur nach Anspruch 6, **dadurch gekennzeichnet**, daß die weitere Materiallage (32,42,43) eine mehrere zueinander und zu der Oberfläche der Mehrschichtmaterialstruktur (30,40) parallele und an den Stirnflächen der Lage offene Kanäle (43) aufweisende - Strukturplatte (42) ist.

8. Mehrschichtmaterialstruktur nach Anspruch 7, **dadurch gekennzeichnet**, daß die die Kanäle (43) aufweisende Strukturplatte (42) aus einer aus Vermiculit, Kaliwasserglas und Wasser gemischten Masse formgepreßt ist.

9. Mehrschichtmaterialstruktur nach Anspruch 7 oder 8, **dadurch gekennzeichnet**, daß die die Kanäle (43) aufweisende Strukturplatte (42) beidseitig mit einer Mehrschichtmaterialstruktur (11,12) nach einem der Ansprüche 1 bis 5 jeweils über deren außenliegendes Holzfurnier (11) kalt verpreßt ist.

10. Verfahren zum Herstellen einer Mehrschichtmaterialstruktur nach einem der Ansprüche 1 bis 9, **dadurch gekennzeichnet**, daß eine Masse aus zwei Teilen Kaolin und drei bis fünf Teilen Wasserglas gemischt und durch Zugabe von Wasser in streich- oder spritzbare Konsistenz überführt wird, daß eine Glasgewebeschicht (13) mit dieser Masse durchtränkt oder beidseitig beschichtet wird, daß danach die so vorbereitete Masse zwischen zwei einfachen Holzfurnieren (11) oder einem einfachen Holzfurnier (11) und einer Hartfaser- oder einer mehrfach versperrten Sperrholzplatte 21,22) eingelegt wird, worauf die Schichten unter Anwendung von Wärme und Druck und unter Verdampfen im wesentlichen des Wasseranteils verpreßt werden.

11. Verfahren nach Anspruch 10, **dadurch gekennzeichnet**, daß nach dem Verfestigen der Mehrschichtmaterialstruktur mit dieser eine oder mehrere weitere Lagen unter Verwendung von Kaltleim bei erhöhtem Druck vereinigt werden.

12. Feuerhemmende Leichtbautüre, bestehend aus einem tragenden Rahmenwerk (110), an dem die Türbeschläge und dgl. angebracht sind, und plattenförmigen Türfüllungselementen, **dadurch gekennzeichnet**, daß beiderseits Deckplatten (113) vorgesehen sind, die auch das Rahmenwerk (110), wenigstens teilweise, abdecken und aus einem Material bestehen, das Vermiculit und/oder Kaolin als Füllstoff gebunden in Wasserglas enthält und außenseitig (114,115) mit einem Fasergewebe, insb. Glasfasergewebe (13), verbunden ist, das mit einer Masse beschichtet ist, die aus Wasserglas und Kaolin besteht und nach außen durch eine Deckschicht abgedeckt ist.
